# EUROPEAN PATENT APPLICATION

(11) **EP 1 280 085 A1**
(43) Date of publication of application: **29.01.2003**
(21) Application number: 02078062.3
(22) Date of filing: 25.07.2002
(51) Int. Cl.: G06F 17/60

(54) **A method for generating a user interface**

(30) Priority: 25.07.2001 US 911733
(71) Applicant: SCA Hygiene Products AB, 405 03 Göteborg (SE)
(72) Inventor: Kling, Asa, 431 50 Mölndal (DK); Svensson, Björn, 435 41 Mölnlycke (SE)
(74) Representative: Plougmann & Vingtoft A/S

(57) **Abstract**

A method for generating a user interface for displaying data, such as healthcare product consumption and cost information, comprises allocating a plurality of institutions, e.g. hospitals or nursing homes, into groups. Groups may be altered, and time periods and currencies may be selected. Data may be stored in a central database of a server operatively connected to a distributed computer network. A graphical user interface is created in which a report chosen among a plurality of reports is displayed. The invention may enable a manufacturer of products, such as incontinence products, to analyse a consumer's use of the products, whereby a specific manufacturing cycle may be tailored. Statistical handling of consumption data, stock management and cost and budgetary control may be improved.

## Description

### FIELD OF THE INVENTION

The present invention relates to a method and a computer system for generating a user interface for displaying data. The computer system may be a distributed communication system.

### BACKGROUND OF THE INVENTION

Until recently, distribution of products was tracked and reordered using conventional paper based methods. That is, product consumption and reorders were tracked using conventional mail or facsimile communication between the consumer and the manufacturer. This type of product tracking proved time consuming.

Currently, information related to consumed products is either maintained as written media, or stored and tracked in databases in volatile and/or non-volatile computer memory. Such database data relating to consumed products is often stored in a database at a consumer's side and in a database at a manufacturer's side. Using the data stored in the databases, both the consumer and the manufacturer are capable of generating reports regarding the total consumption of a specific product or plurality of products.

Information concerning consumption of incontinence products is currently stored in databases as described in the previous paragraph. Distinct and separate databases at the consumer and manufacturer locations are required in order to allow each party the opportunity to specifically and accurately track consumption of incontinence products. However, because the manufacturer and consumer databases are not connected, similar information must be stored in each of the database systems. This creates redundancies. Moreover, in a closed system where the manufacturer and consumer each have autonomous databases, statistical information relating to incontinence products, that may lead to a cost benefit for both the manufacturer and consumer, may be unavailable to the involved parties.

Further, for products such as incontinence products, consumers are frequently a number of separate institutions and/or hospitals and therefore each institution will only have data related to the consumption by the individual institutions. Currently, systems for generating a user interface for deriving and/or information related to for example incontinence product consumption and tracking are therefor limited and an improved system would therefore be advantageous.

### SUMMARY OF THE INVENTION

The invention seeks to provide an improved system for generating a user interface. Preferably the user interface comprises information such as information related to the tracking and/or consumption of products such as incontinence products.

Accordingly, one aspect of the invention provides a method for generating a user interface for displaying data, the method comprising the steps of:
- generating a first graphical user interface having a user selectable field for selection of an institution group from a plurality of groups of institutions, another user selectable field for selection of a time period, means for selecting a currency type, and a first and a second button,
- generating a second graphical user interface upon actuation of the first button, the second graphical user interface having means for creating and modifying an allocation of institutions to the plurality of groups of institutions,
- storing, in response to a first user input, a first set of data representing, for each group of the plurality of groups of institutions, identification data of institutions contained in that group,
- creating a second set of data in response to a second user input, the second set of data representing at least an identification of the institution group, the time period, and the currency type selected by the user,
- generating a third graphical user interface in response to the first and second set of data upon actuation of the second button, the third graphical user interface displaying a first report chosen from a plurality of predefined reports, wherein the report comprises information relating to the institution group and the time period, the third graphical user interface comprising means for displaying a second report chosen from the plurality of predefined reports for each of the institutions of the institution group.

Information contained in the reports preferably relate to consumption of products, such as healthcare products, in particular incontinence products. To a wide extent, such products are used in institutions like hospitals and nursing homes. The present invention provides a method which, by allowing reports to be generated for the groups of institutions, facilitates handling of data related to the consumption of such products, in particular statistical handling, cost and budget control, and stock maintenance. More specifically, a group may for example comprise all hospitals in a certain geographical area, such as a particular district. Thus, an administrative authority of that district, responsible of purchasing the products from a supplier or manufacturer of the products, may define one group of hospitals which comprises all the hospitals of the district and base purchasing orders on the reports. The authority might also be interested in determining a variation of consumption of the products between cities of the district, in which case the authority may conveniently define several groups of hospitals, so that each group comprises the hospitals of a particular city. Likewise, it may be desirable to make a statistical survey of the impact of sociological factors on the consumption of products. In that case, one group of institutions may comprise a district's nursing homes for elderly people, whereas another group may comprise that district's hospitals.

In preferred embodiments of the invention, the reports are based on data which have previously been stored in a central database, i.e. a database which is accessible by a plurality of users, such as an administrating office of a certain district, various wards of various institutions, and suppliers of products. It will be appreciated that the grouping of institutions as discussed above is particularly advantageous when the data underlying the reports are stored in the central database, as redundancies are avoided. Also, by storing the data in a central database, a more complete statistical material is available than if the data were stored in local databases, e.g. in individual databases of each institution, and costs may be saved. Further, due to the availability of more complete consumption data, more precise predictions for future consumption may be made.

In the first graphical user interface a user may select an institution group from a plurality of groups, a time period, such as a certain month of a certain year, and a currency, for example EUR, GBP or USD. Thus, the user may select to view the reports, such as product consumption and cost reports based on one of a plurality of currencies, whereby no need exists for manually converting costs between currencies. In the second graphical user interface, the user may define the groups. For example, a new group of institutions may be defined, or an existing group may be modified by adding a new institution to the group or by deleting an institution from the group. Once the user has completed creation or alteration of a group, the first set of data is stored in response to a user input, for example a confirmation by the user that the envisaged creation or alteration is to be stored. Following the user's input in the first graphical user interface, i.e. selection of group, time period and currency, the third graphical user interface is generated, displaying the first report. If the user desires to view a certain report for a particular one of the institutions of the institution group, the user may, thanks to the provision of the means for displaying a second report, obtain the second report directly from the third graphical user interface. Thus, if the third graphical user interface displays, as the first report, a summary report for a given group, the user may select to obtain, as the second report, a summary report for a certain institution of that group.

Thus, the invention allows access to consumed product information in a simple, easy to understand and user-friendly format, and in particular the invention allows a user to view product information relating to specific institutions owned or affiliated with the consumer. Also, in case of the invention being implemented for use in healthcare product management, such as for use in incontinence product management, healthcare may be improved in the sense that the risk of a particular healthcare product being out of stock is reduced. With regard to manufacturer, embodiments of the invention are advantageous in the sense that the manufacturer is capable of analysing a consumer's use of, e.g. incontinence products, whereby a specific manufacturing cycle of particular types of incontinence products may be tailored. The ability to tailor a specific manufacturing cycle to particular products reduces manufacturing costs. Additionally, the ability to follow care procedures of incontinence product customers increases the manufacturer's understanding of the customers' needs.

The first and second reports may e.g. comprise summary reports summarising a total amount of products used in the selected group of institutions during the selected period of time. In preferred embodiments of the invention, the user may select to view such a summary or a detail report including product-specific information pertaining to the products used in the selected group of institutions during the selected period of time. By product-specific information is meant information related to each of a plurality of different products and/or different product variants. A ward report may also be foreseen which outlines incontinence products consumed by each ward in the consumer institution.

In the groups of institutions, each institution may be represented by one or more wards of that institution. Thus, one group may for example comprise all psychiatric wards of the hospitals of a given district, whereas another group may comprise all medical wards of those hospitals.

The third graphical user interface may comprise a graph pertaining to costs associated with the products used, thereby facilitating a user's analysis of costs. Costs versus budget may be depicted in the graph.

The method of the invention is preferably carried out by means of computers operatively interconnected in a distributed computer network, such as the internet or World Wide Web. Thus, a practically unlimited number of users may view, e.g. product consumption information stored in, e.g. a central database of a server.

Thus, in a second aspect the invention provides a computer system for generating a user interface for displaying data, the system comprising:
- a first distributed computer network comprising at least one server with a processor and a database,
- at least one workstation comprising a processor, a display unit and user input means,
- data transmission means for allowing transmission of data between the server and the workstation,
the computer system being operable to:
- generate, in the display unit of the workstation, a first graphical user interface having a user selectable field for selection of an institution group from a plurality of groups of institutions, another user selectable field for selection of a time period, means for selecting a currency type, and a first and a second button,
- generate, in the display unit of the workstation, a second graphical user interface upon actuation, via the user input means, of the first button, the second graphical user interface having means for creating and modifying an allocation of institutions to the plurality of groups of institutions,
- store in the database, in response to a first user input, a first set of data representing, for each group of the plurality of groups of institutions, identification data of institutions contained in that group,
- create a second set of data in response to a second user input, the second set of data representing at least an identification of the institution group, the time period, and the currency type selected by the user,
- in the display unit of the workstation: generate a third graphical user interface in response to the first and second set of data upon actuation of the second button, the third graphical user interface displaying a first report chosen from a plurality of predefined reports, wherein the report comprises information relating to the institution group and the time period, the third graphical user interface comprising means for displaying a second report chosen from the plurality of predefined reports for each of the institutions of the institution group.

A plurality of workstations may be integrated in or connected to the computer network, whereby each workstation is typically capable of generating the first, second and third user interfaces.

A plurality of servers may be provided, whereby each of a plurality of the workstations may be arranged to communicate with one server via the first network. Thus, a plurality of central computing entities, i.e. servers, each including a database, may be provided. Typically, this is the case when a single supplier or manufacturer of certain products, e.g. incontinence products, is supplying products to users in a number of different states, in which case a server and thus a central database may be provided in each state. As the users and institutions are usually operating and arranged at distinct geographical locations, individual workstations may be arranged at the institutions, local administrating authorities and at other locations where access to, e.g. product information is desirable.

In embodiments of the invention, the plurality of servers may be connected to a main server via a second distributed computer network. Thus, for example a main frame server may be provided which is capable of administrating and processing large amounts of data deriving from a large number of institutions in a number of states. The main frame server may e.g. be operatively connected to or integrated with a production control and planning system of the manufacturer of the products in question, whereby the production may be tailored to current demand and usage. The first and second network may be sub-networks of the same overall network, e.g. the internet.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:
FIG. 1 is a flow chart illustrating responses to selectable items on an Institution GUI;
FIG. 2 is a flow chart illustrating responses to selectable items on a Summary Report GUI;
FIG. 3 is a flow chart illustrating responses to selectable items on a Detail Report GUI;
FIG. 4 illustrates a flow chart of processes selectable from a Group GUI;
FIG. 5 illustrates a Group GUI according to an embodiment of the present invention;
FIG. 6 illustrates a Create Group window;
FIG. 7 illustrates a Change Group window;
FIG. 8 illustrates a Delete Group window;
FIG. 9 illustrates a flow chart of processes selectable after selecting a Maintained Group button on the Group GUI;
FIG. 10 is a flow chart illustrating a process branching from the flow chart shown in Fig. 9;
FIG. 11 is a flow chart illustrating a process branching from the flow chart shown in Fig. 4;
FIG. 12 is a flow chart illustrating selectable choices on the Detail Report GUI;
FIG. 13 is a flow chart illustrating selectable choices on a Inst Report GUI;
FIG. 14 illustrates a Summary Report GUI;
FIG. 15 illustrates a Detail Report GUI;
FIG. 16 illustrates a superimposed graph window assessable from the Detail Report illustrated in FIG. 15;
FIG. 17 illustrates a Summary Group Report GUI;
FIG. 18 illustrates a superimposed information window relating to the Group GUI illustrated in Fig. 17;
FIG. 19 illustrates a superimposed window that may be accessed using an Information icon illustrated in Fig. 17;
FIG. 20 illustrates a Detail Group Report GUI;
FIG. 21 illustrates an Inst Group Report; and
FIG. 22 illustrates the Detail Report GUI as a superimposed window.

### DETAILED DESCRIPTION OF THE PREFERRED EMBODIMENTS

In the following, a detailed description of a preferred embodiment of the invention is given, focussing on an application for tracking and providing information related to consumption by medical institutions of incontinence products. However, it will be clear that the invention is not limited to this specific embodiment.

In accordance with a preferred embodiment of the invention, a computer system has a first distributed computer network, at least one server with a processor and a database. The processor collects and stores information in the database related to sale and delivery of products, such as incontinence products to institutions such as hospitals. The computer system further comprises at least one workstation comprising a processor, a display unit and user input means. Typically, a plurality of institutions each have a workstation connected to the server through data transmission means such as a network connection.

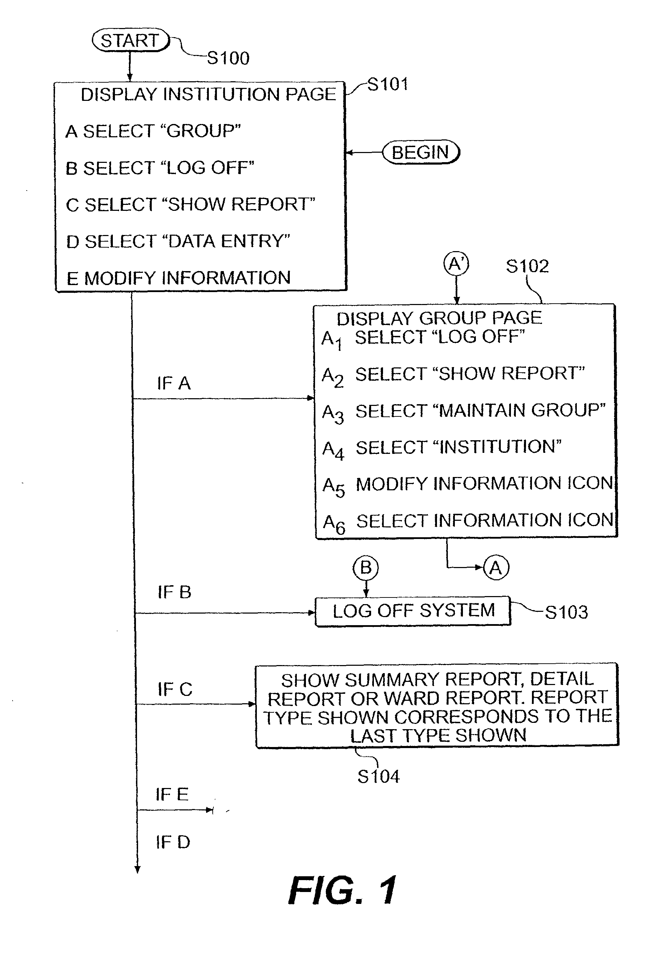

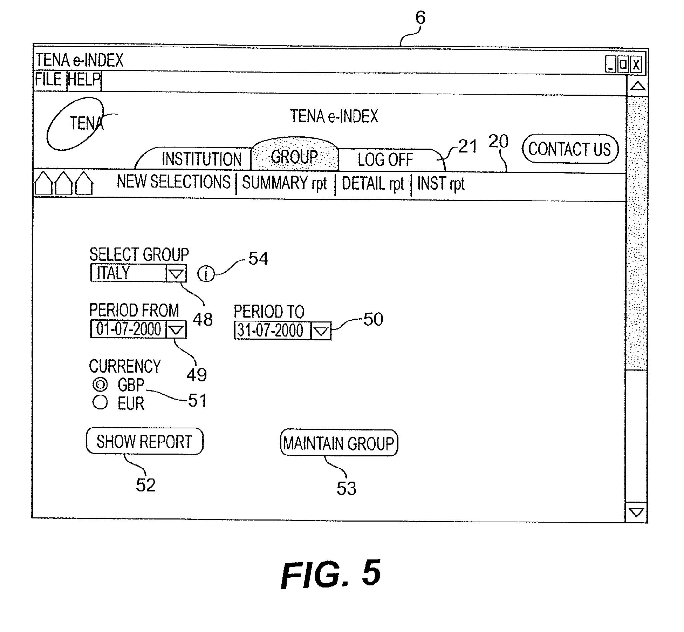

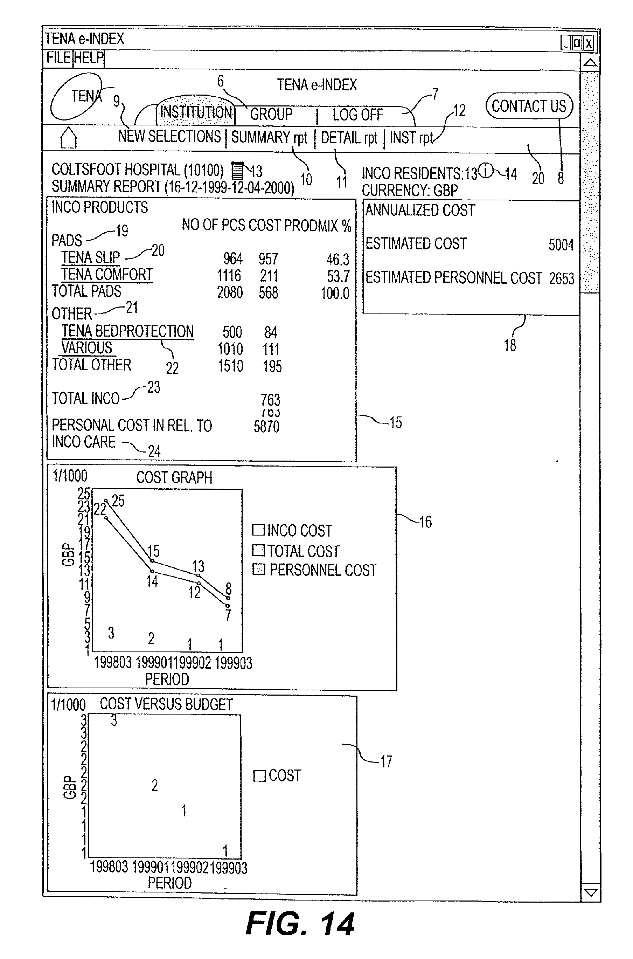

Figs. 1-4 and 9-13 are flow charts illustrating the operational characteristics of the Graphical User Interfaces (GUI) illustrated in Figs. 5-8 and 14-22 being used as a user interface on the workstations distributed at the institutions. Specifics of the GUI environment as shown in Figs. 14-22 will be described after the description of the flow charts and GUIs illustrated in Figs. 1-13.

Fig. 1 is a flow chart illustrating the processes that occur upon selection of certain selectable objects on a GUI of a work station situated in an institution according to the preferred embodiment of the invention.

After a user has logged on (S100) to a work station, the Institution GUI is displayed (S101). The Institution GUI displays various selectable items. The user may select a specific institution, a particular period, define the type of report and currency, and/or immediately show a report. The user may also select to proceed to a Group GUI or Data Entry GUI if desired. The specifics of the Group GUI will be discussed hereinafter. However, Data Entry functionality will not be discussed in detail. The user may also choose to log off or display a window containing contact information.

Once the user has modified the information shown on the Institution GUI, or if the information was correct when the GUI environment was first initialized, the Show Report button may be actuated. The actuation of the Show Report button will display a Summary Report GUI, Detail Report GUI or Ward Report GUI.

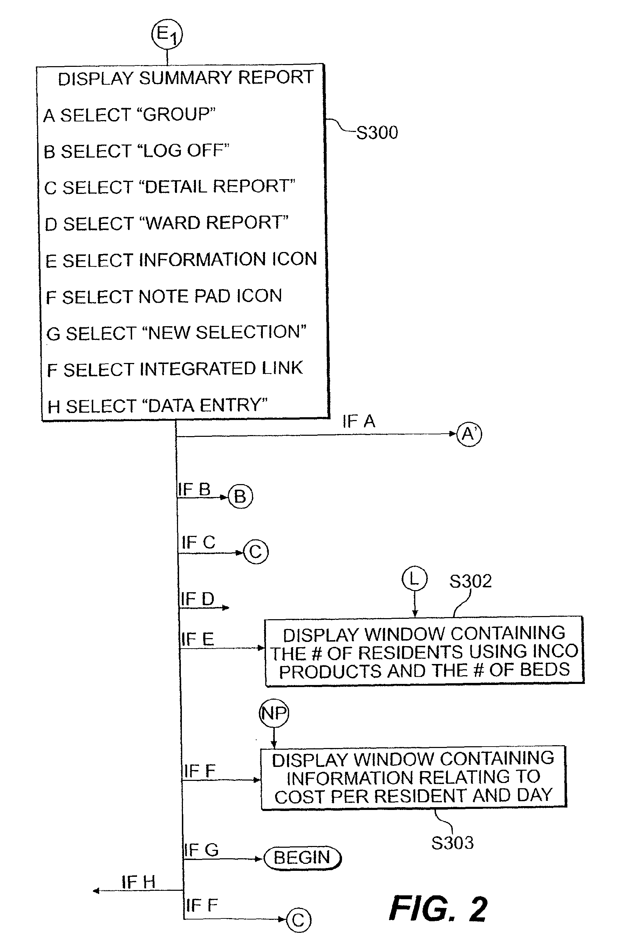

As an example, Fig. 2 illustrates a flow chart of the processes accessible from the Summary Report GUI. The user may for example select to display the Group GUI, log off, display the Detail Report GUI, display the Ward Report GUI, select an Information icon (providing information on the number of residents using incontinent products), select a Notepad icon (providing cost related information), select New Selection (returning to the start up screen of FIG. 1) etc.

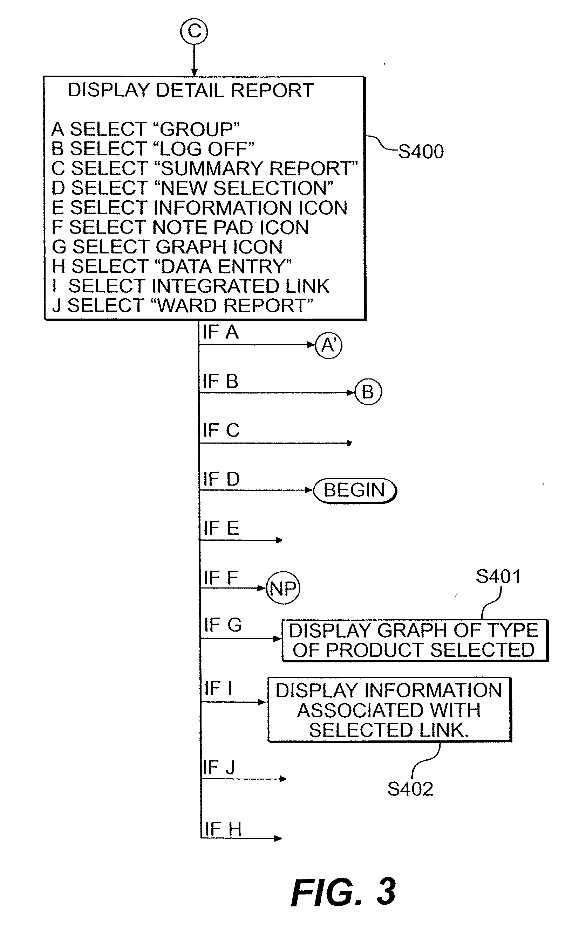

Fig. 3 illustrates a flow chart of the selectable options on the Detail Report GUI. Similar to the Summary Report and Institution GUIs, the Detail Report GUI contains selections to the Group Report GUI, log off, Summary Report GUI, New Selection, the Information icon, the Notepad icon, the Data Entry GUI and the Ward Report GUI. However, the Detail Report GUI also includes specific graphing icons related to various incontinence products used in the selected hospital. These graphing icons pictorially illustrate specific products used over the report period.

Similarly, the ward report GUI comprises selections for selection of ward reports equivalent to the summary and detail reports. In addition the ward report GUI for example comprises links to other wards in the selected institution.

In accordance with a preferred embodiment of the invention, the computer system is operable to generate information and receive user input related to a group of institutions or in some embodiments, one or more wards of the institution. For this purpose a Group GUI is generated and presented at the display unit of a workstation.

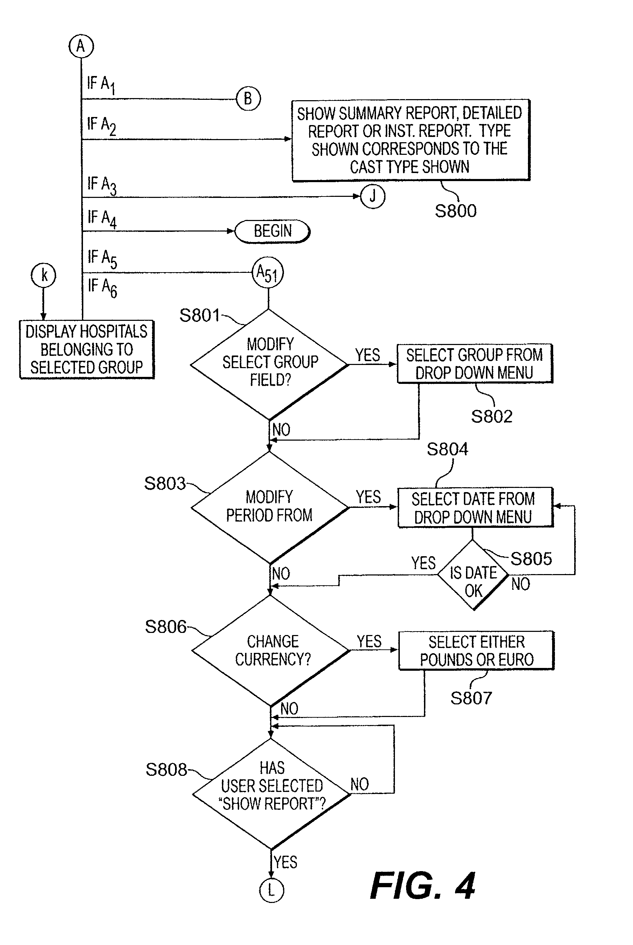

Fig. 4 illustrates selectable options from the Group GUI. As is indicated previously, the Group GUI is accessible from various other GUI's as desired by the user. Fig. 1 illustrates the selections available on the Group GUI (S102). Selecting log off will log the user off of the system. Selecting the Show Report button will immediately display the Summary Report GUI, the Detail Report GUI, or the Institution Report GUI. The specific report GUI shown corresponds to the last report type shown. However, if this is the first instantiation of selecting Show Report, the default Summary Report Group GUI will be displayed. The selection of the Maintain Group button on the Group GUI will display an overlay window that allows the user to modify groups. Details related to the modification of specific groups will be discussed later. Selecting the Institution link on the Group GUI will display the Institution GUI referenced in Fig. 1.

In accordance with a preferred embodiment of the invention, a first graphical user interface is generated at the display unit of a workstation. The first GUI has a user selectable field for selection of an institution group from a plurality of groups of institutions, another user selectable field for selection of a time period, means for selecting a currency type, and a first and a second button.

Modification of original information shown on the Group GUI is possible from the first GUI as shown in Fig. 4, shown following node A₅₁. If the user chooses to modify the Select Group field (S801), a predefined group from a list shown in a drop down menu may be selected (S802). Thus the user selectable field (Select Group Field) for selection of an institution group from a plurality of groups of institutions provides an easy way of selecting groups. The user may also modify the desired starting period (S803) using the user selectable field for selection of a time period. To accomplish modification of the starting period, the user selects the start date of the period from the drop down menu (S804). A similar procedure is used to modify an end date. The user may also change the display currency (S806), for example from between Pounds and Euros, by using means for selecting a currency type (S807). Once the user has made any desired changes to the selectable parameters on the Group GUI, a second of two buttons, the Show Report button, may be actuated (S808) resulting in generation of a first report chosen from a plurality of predefined reports. The report comprises information relating to the institution group and the time period.

Fig. 5 illustrates a Group GUI according to the present embodiment. The Group GUI 6 includes a toolbar 20 and tab box for easy selection of specific actions. In addition, the Group GUI 6 includes a select group drop down menu 48, a period from drop down menu 49, a period to drop down menu 50, currency selections 51, a first button "Maintain Group Button"53, a second button "Show Report button" 52, and an Information icon 54. The selected group drop down menu 48 allows the user to choose between specific predefined groups. These predefined groups contain specific institutions affiliated with each predefined group. The Information icon 54 allows the user to view the specific institutions in the displayed group within the select group drop down menu 48. In other words, actuation of the Information icon 54 will generate a superimposed window listing specific institutions associated with a selected group. The period from drop down menu 49 allows the user to select a starting date delimiting the earliest possible data shown on a report displayed after actuating the Show Report button 52. The period to drop down menu 50 allows the user to delimit the outer boundaries of the data shown on a report generated by selecting the Show Report button 52. The currency selection menu 51 allows the user to select between specific currencies. In the figure, either Pounds or Euros may be chosen. However, other currency types may also be included and are fully within the contemplation of the present invention. The Maintain Group button 53 allows the user to add to, delete from, and/or create groups selectable within the selected group drop down menu 48.

In response to the operations performed on the second graphical user interface, a set of selection data representing at least an identification of the institution group, the time period, and the currency type selected by the user is generated. Thus the selection data can be used to specifically select operations and data related to the institutions of the group which has been selected.

In accordance with the preferred embodiment of the invention, the computer system further comprises means for generation of a second graphical user interface upon actuation of the first "maintain group" button, the second graphical user interface having means for creating and modifying an allocation of institutions to the plurality of groups of institutions. The second graphical user interface is typically a create group window, a change group window or a delete group window.

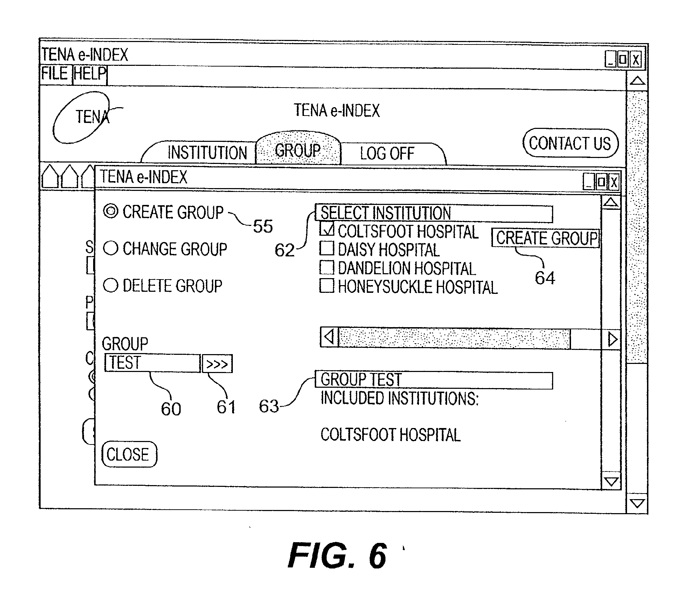

Fig. 6 illustrates a create group window 59. As is seen in the figure, the create group selection 55 has been selected by the user. This is evidenced by the darkening of the circle directly adjacent to the create group selection 55. The create group window 59 includes a group field 60. The group field 60 allows the user to enter a specific group name. The group name may contain a combination of alphanumeric characters, or the like. Actuation of an arrow box 61 brings up a selection field 62. The selection field 62 includes specific institutions, which may be added to the group entered in the group field 60. In the window shown in Fig. 6, four hospitals may be chosen from. However, additional hospitals may also be listed under the select institution listing 62. After choosing the desired hospitals for inclusion in the group entered in group field 60, a create group button 64 is actuated. Upon actuation of the create group button 64, a group display field 63 is shown. The group display field 63 includes the alphanumeric group entered in the group field 60 along with the institutions selected in select institution field 62. The group created within the create group 59 will now be selectable from the select group field 48 of the Group GUI 6 (Fig. 5).

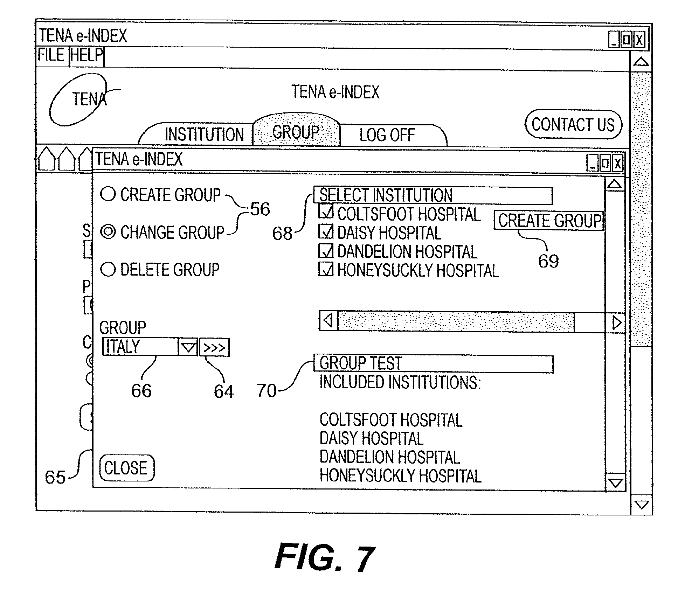

Fig. 7 illustrates a change group window. The change group window 65 is displayed once the change group selection 56 is chosen. The change group window 65 includes a group selection drop down menu 66. The group selection drop down menu 66 includes all the groups currently contained within a group database (not shown). Once a group is selected from the group drop down menu 66, a user may actuate an arrow button 67. The arrow button 67 displays a select institution section 68. The select institution section 68 includes all the hospitals included within the group selected from the group drop down menu 66. In addition, any additional groups which are not a part of the group selected in the group drop down menu 66 are also displayed in the select institution section 68. At this point, the user may select any institution(s) which must be added to the selected group. Alternatively, the user may also remove specific institutions from the selected group. Once additions and/or deletions have been made, the user may select the change group button 69 to initiate the change. The changes made to the selected group are shown in a group section 70. The group section 70 displays the group name along with the institutions. In this case, hospitals, which are part of the selected group.

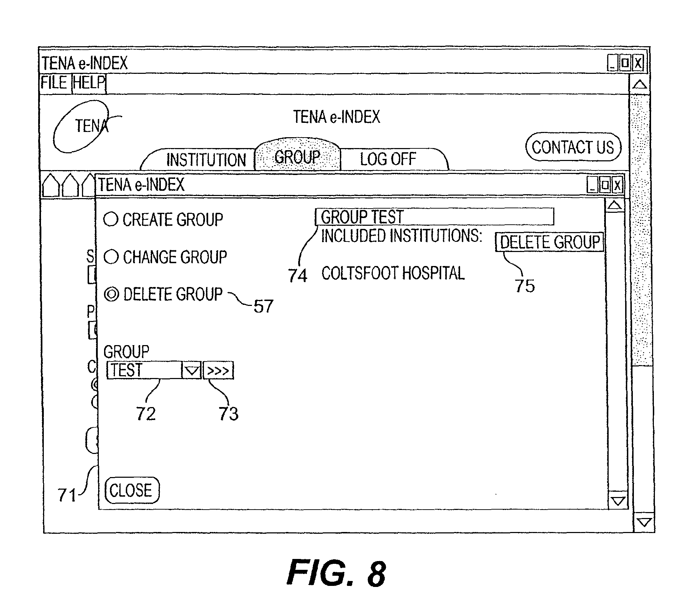

Fig. 8 illustrates a delete group window. The delete group window 71 is displayed upon selection of the delete group selection 57. The delete group window 71 contains a group drop down menu 72, an arrow selection button 73, a group section 74 and a delete group button 75. The user may select a specific group from the group drop down menu 72. Upon selection of a desired group, the user may actuate the arrow button 73 in order to display the group section 74. The group section 74 includes information pertaining to the selected group; in particular, the specific institutions associated with the selected group. The selected group may be deleted using the delete group button 75.

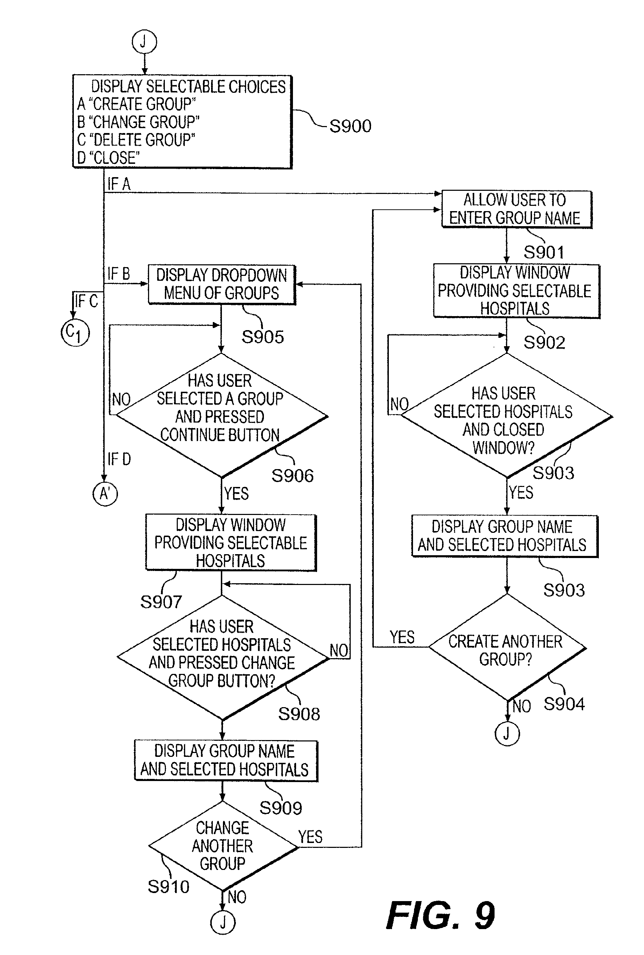

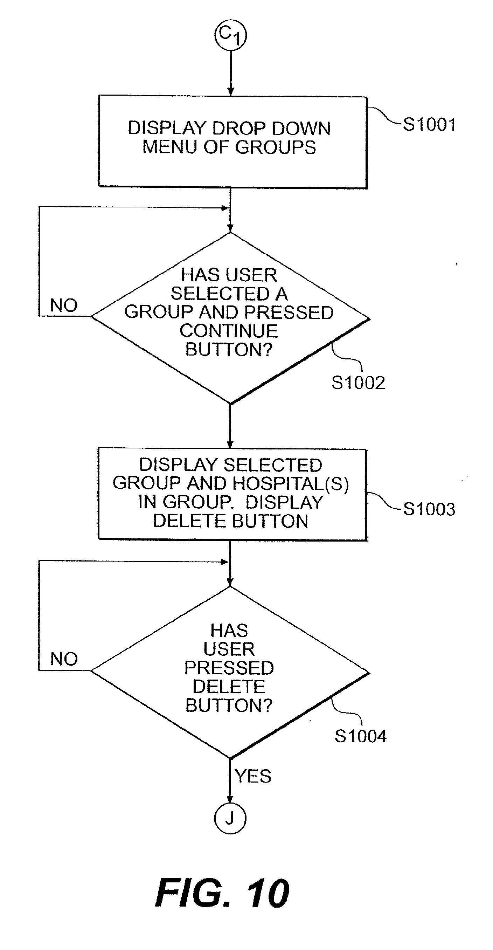

Fig. 9 further illustrates the flow chart for the generation and operation of the second graphical user interface and FIG. 10 specifically illustrates a flow chart for a method of deleting institutions from a group.

As illustrated in Fig. 9, various choices are selectable (S900). If Create Group is selected, a Create Group sequence (S901, S902, S903, S904) is carried out. Following the Create Group sequence, the selectable choices are presented anew at J. If Change Group is selected at (S900), a Change Group sequence (S905, S906, S907, S908, S909, S910) is carried out, and once that sequence is completed the selectable choices are presented anew at J. Following a selection of Delete Group at (S900), a Delete Group sequence (S1001, S1002, S1003) is carried out, cf. Fig. 10, following which the selectable choices are presented anew at J.

In response to the operations performed on the second graphical user interface, a group association set of data representing, for each group of the plurality of groups of institutions, identification data of institutions contained in that group is stored. Thus the identification of data can be used to specifically select operations and data related to the institutions of a group which can be easily selected from a plurality of groups.

Hence, in accordance with an embodiment of the invention a third graphical user interface is generated at the workstations in response to a first (the selection set) and second (the group association set) set of data upon actuation of the show report button. The third graphical user interface displays a first report which is chosen from a plurality of predefined reports, wherein the report comprises information relating to the institution group and the time period selected. The predefined reports may comprise a group summary report or group detailed report. The third graphical user interface also comprises means for displaying a second report chosen from the plurality of predefined reports for each of the institutions of the institution group.

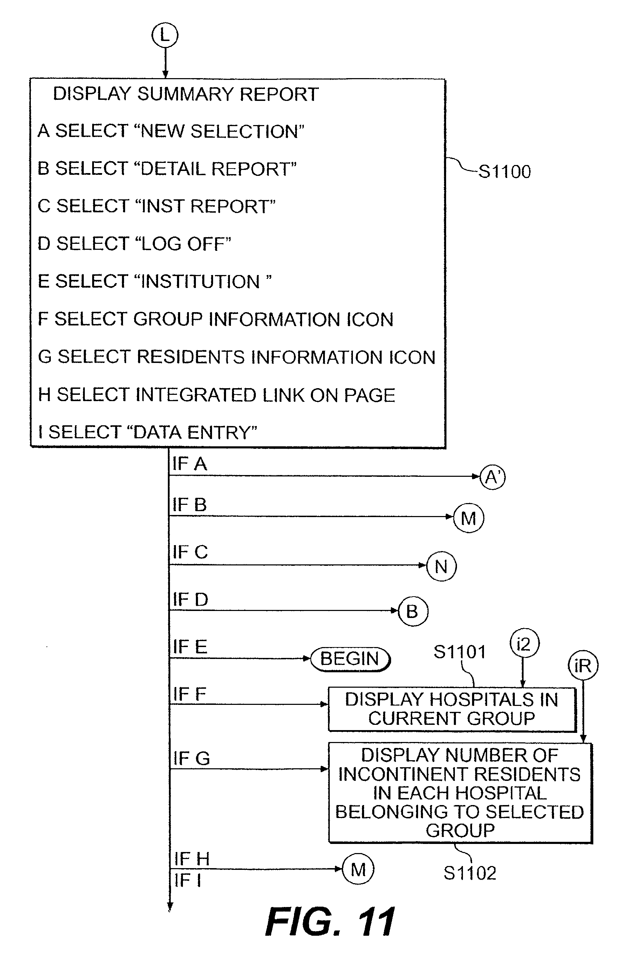

Fig. 11 illustrates the flow chart relating to the selections available on the Summary Group Report GUI which is one of the predefined reports that can be chosen for the third user interface group. The Summary Group Report GUI includes selections to New Selection, the Detail Report GUI, log off, Institution GUI, a Group Information icon, a Residence Information icon, specific integrated links on the Summary Group report GUI, and a link to the Data Entry GUI (S1100). The links to New Selection, Detail Report GUI, log off, Institution, Data Entry GUI function in the same manner as previously discussed. For brevity, the discussion relating to the links will not be repeated.

Selection of the Group Information icon displays in a superimposed window the specific hospitals related to the selected group (S1101). Selection of the Resident Information icon creates a superimposed window containing information related to the number of residents using incontinence products in each of the hospitals in the selected group (S1102). Selection of one of the integrated links on the Summary Group Report GUI will display the Detail Group Report GUI, which will be discussed hereinafter.

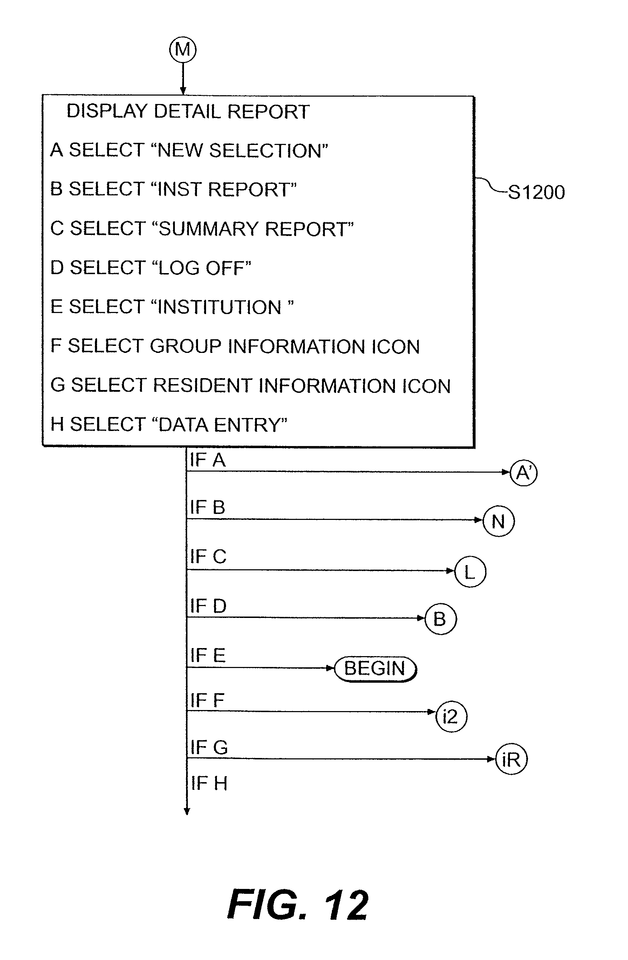

Fig. 12 illustrates a flow chart representative of the selections available on the Detail Group Report GUI. The Detail Group Report GUI provides selections to New Selection, the Institution GUI, the Summary Group Report GUI, log off, the Institution GUI, the Group Information icon, the Resident Information icon, and the Data Entry GUI (S1200). Each of these specific selections has been discussed previously and will not be repeated for brevity.

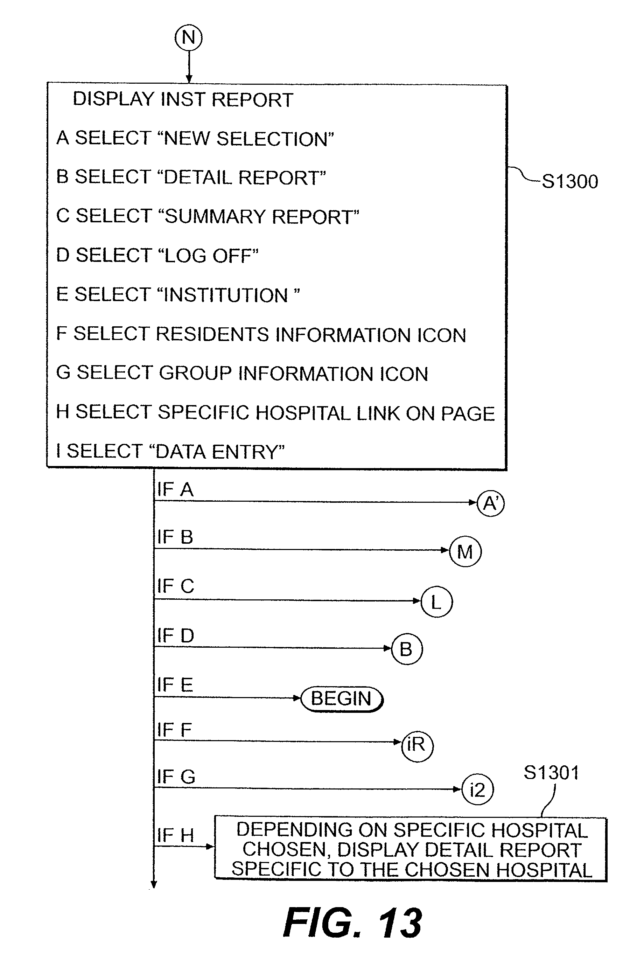

Fig. 13 is a flow chart illustrating selections available on the Inst Group Report GUI. The selections available on the Inst Group Report GUI are New Selection, the Detail Group Report GUI, the Summary Group Report GUI, log off, the Institution GUI, the Residence Information icon, the Group Information icon, specific links to hospitals in a chosen group, and a link to the Data Entry GUI. Selecting one of the specific links to the hospitals will, depending on the hospital link chosen, display the Detail Report that relates to the chosen hospital. The specific report obtained for the chosen hospital is also available through the Institution GUI.

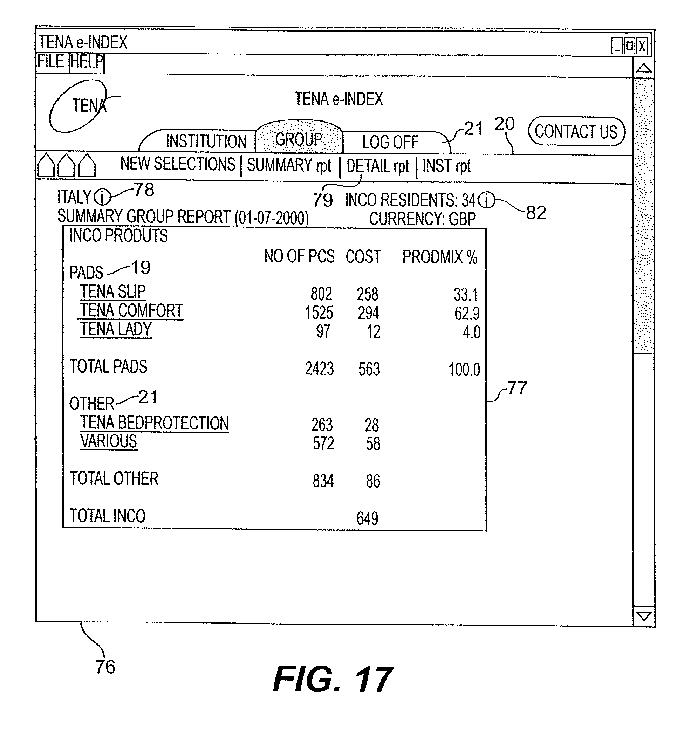

Figs. 17-22 illustrate various examples of GUIs of the preferred embodiment. The GUIs illustrated in Figs. 17-22 are operatively connected via the processes shown in Figs. 1-4 and 9-13.

Fig. 14 illustrates an example of the Summary Report GUI 10. As indicated heretofore, the Summary Report GUI is accessible from various links within the GUI environment. The summary report GUI 10 includes generalized information related to the institution selected. From the Summary Report GUI 10 various other GUI reports may also be selected. For example, the Detailed Report GUI 11, the Ward Report GUI 12, or the New Selection link 9 may be selected.

The summary report GUI 10 includes an incontinence products window 15, a cost graph window 16, a cost versus budget window 17, and an annualized cost window 18. The incontinence products window 15 includes a summary of products used within a specific selected institution. The information listed in the incontinence products window 15 includes pads 19, other 21, total incontinence 23, and personal cost in relation to incontinence care 24. On this report, specific sub products 20 are listed in the pads 19 product listing. The cost graph window 16 illustrates graphically costs related to incontinence products, personal costs, and total costs.

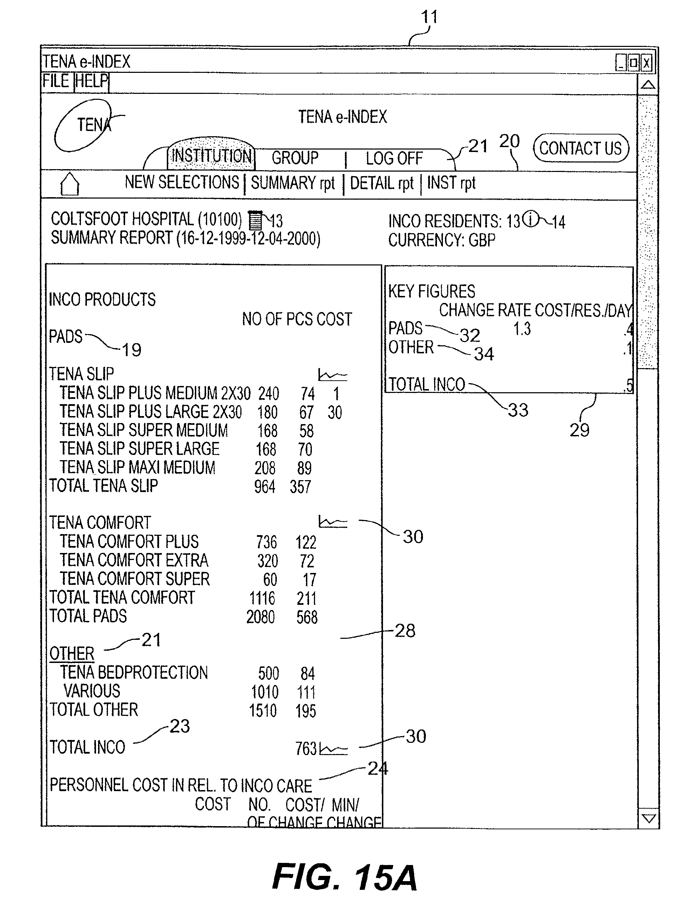

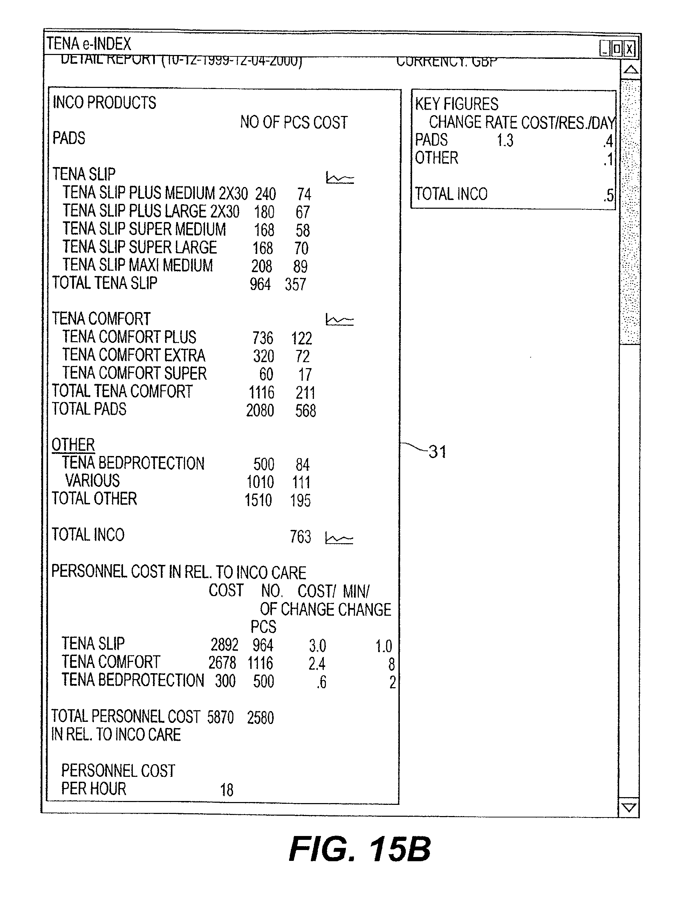

Fig. 15 illustrates the Detail Report GUI. The Detail Report GUI includes toolbar 20 with the tab box. The Detail Report GUI 11 also includes Notepad icon 13 and Informational icon 14. Two specific windows are included on the detail report GUI 11. Those windows are incontinence products window 28 and key figures window 29. The incontinence products window 28 includes specific information related to pads 19, other 21, total incontinence 23, and personal cost in relation to incontinence care 24. The incontinence products window 28 also includes a plurality of graph links 30. The key figures window 29 includes information relating to pads 32, other 34, and total incontinence 33.

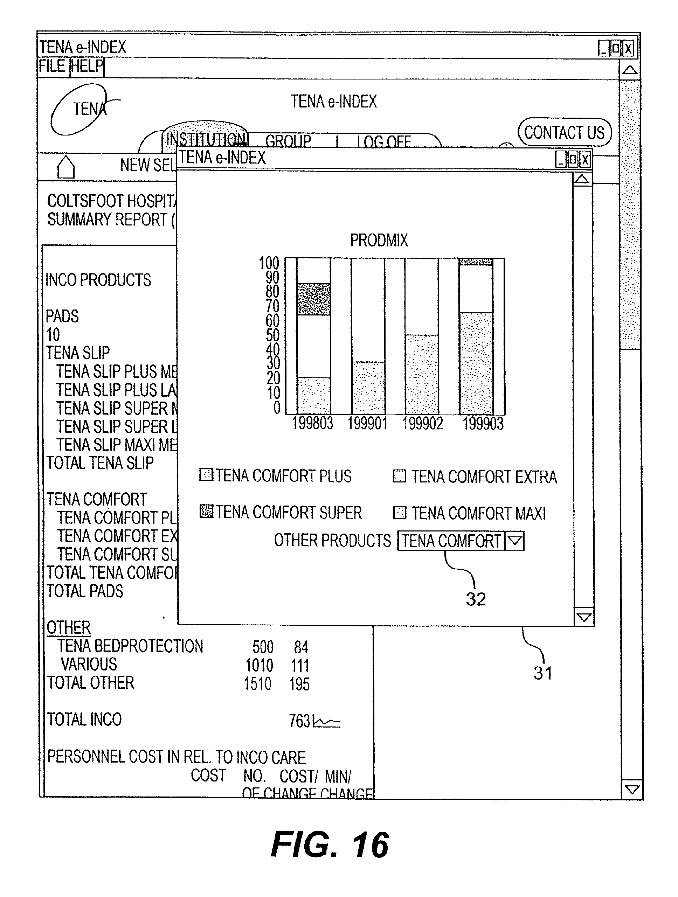

Fig. 16 illustrates a superimposed graph that is selectable from the Detail Report GUI, or one of the graph links 30. The graph 31 illustrates specific information relating to a product group illustrated in the incontinence products window 28. In this case, the superimposed window 31 is a bar graph illustrating product mixes of specific products. Graphs to other products may be selected via drop down menu 32. Similarly, other graphs to specific products may be selected using any one of the graph links 30 (Fig. 15).

Fig. 17 illustrates a Summary Group Report GUI. The Summary Group Report GUI 76 is displayed after actuation of the Show Report button 52 (Fig. 5). The Summary Group Report GUI 76 includes information pertaining to the specific group chosen, a total number of incontinence residents, the chosen start and end dates, the chosen currency, and an incontinence products window 77. The incontinence products window 77 includes information pertaining to pads 19 and other 21. The products listed are links. The links allow the user to directly access a Detail Group Report GUI 79. The Group GUI 76 also includes an Information icon 78.

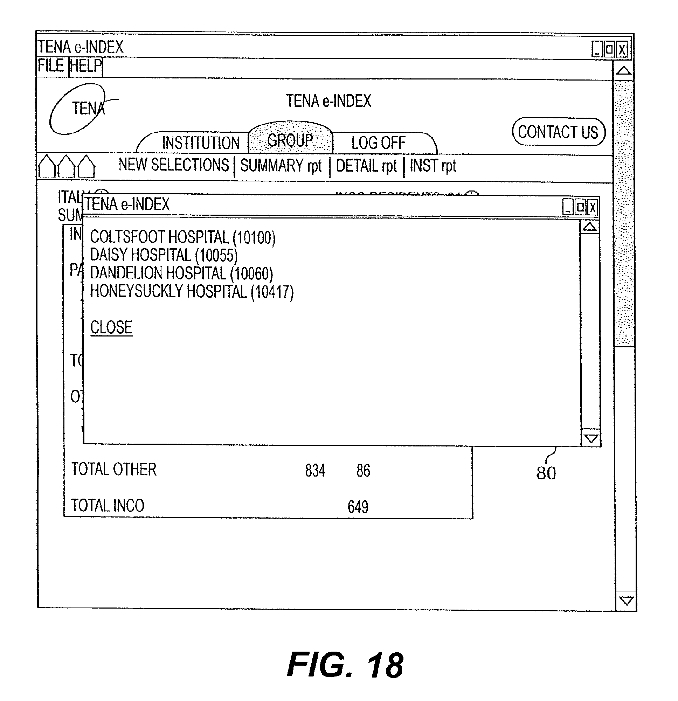

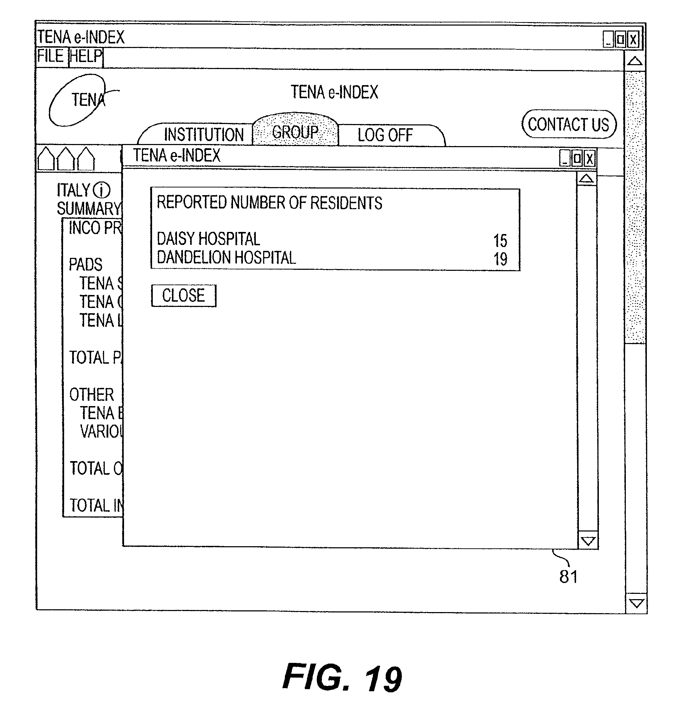

Fig. 18 illustrates a superimposed window relating to the Group GUI illustrated in Fig. 19. The superimposed window 80 is obtained upon actuation of the Information icon 78 (Fig. 19). The superimposed window 80 includes each of the institutions included in the selected group. In this case, the superimposed window 80 lists the hospitals affiliated with group Italy.

Fig. 19 illustrates a superimposed window that may be accessed using an Information icon illustrated in Fig. 17. An incontinence residents window 81 is displayed once a incontinence residents information icon 82 is actuated from the group GUI 76. The window 81 includes information pertaining to the number of residents in each of the hospitals within the selected group. In particular, only those hospitals containing incontinent residents are shown within the window 81.

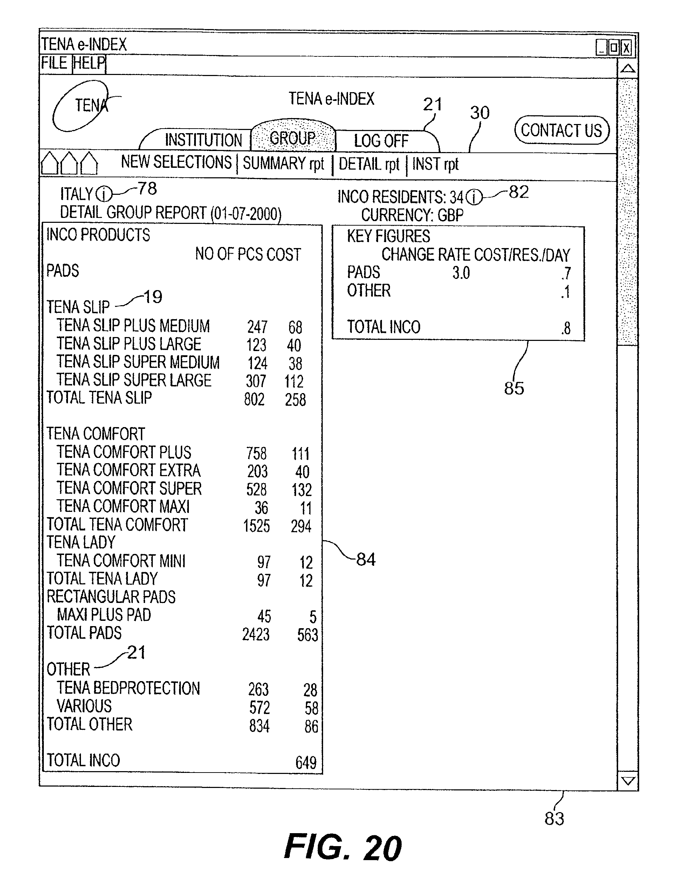

Fig. 20 illustrates a Detail Group Report GUI. The Detail Group Report GUI 83 includes the toolbar 20. Similarly, the Detail Group Report GUI 83 includes information pertaining to the selected group, the total number of incontinence residents, the chosen currency and the specific data period chosen. In addition, the Detail Group Report GUI 83 includes an incontinence products window 84 and a keyfigures window 85. The incontinence products window 84 includes information pertaining to pads 19 and other 21. However, the incontinence products window 84 lists specific products under the pads 19 and the other section 21. Similar to the Summary Group Report GUI 76, the Detail Group Report GUI 83 also includes Information icons 78 and 82. The specifics related to the Information icons 78 and 82 were discussed heretofore.

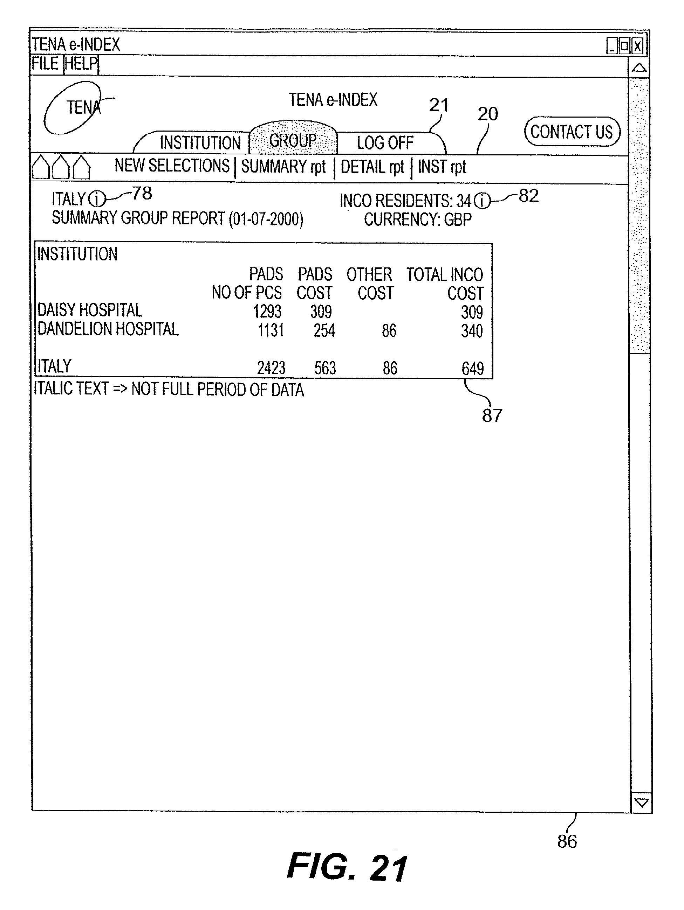

Fig. 21 illustrates an Inst group report. The Inst group report 86 GUI includes information pertaining to specific institutions affiliated with the chosen group. Moreover, the Inst Group Report GUI 86 includes the toolbar 20 and the tab box. Moreover, the GUI 86 includes information pertaining to the selected group, the total number of incontinence residents, the report period, and the selected currency. Information icons 78 and 82 are also selectable from the Inst Group Report GUI 86. An institution window 87 is part of the Inst Group Report GUI 86. The institution window 87 includes information pertaining to specific institutions of the chosen group. In particular, the listed institutions 88 are those which use/used incontinence products in caring for specific residents. The listed institutions 88 are linked to their respective detail report GUI's. In particular, actuation of either of institutions 88 will bring up a superimposed window containing a Detail Report GUI specific to the selected institution.

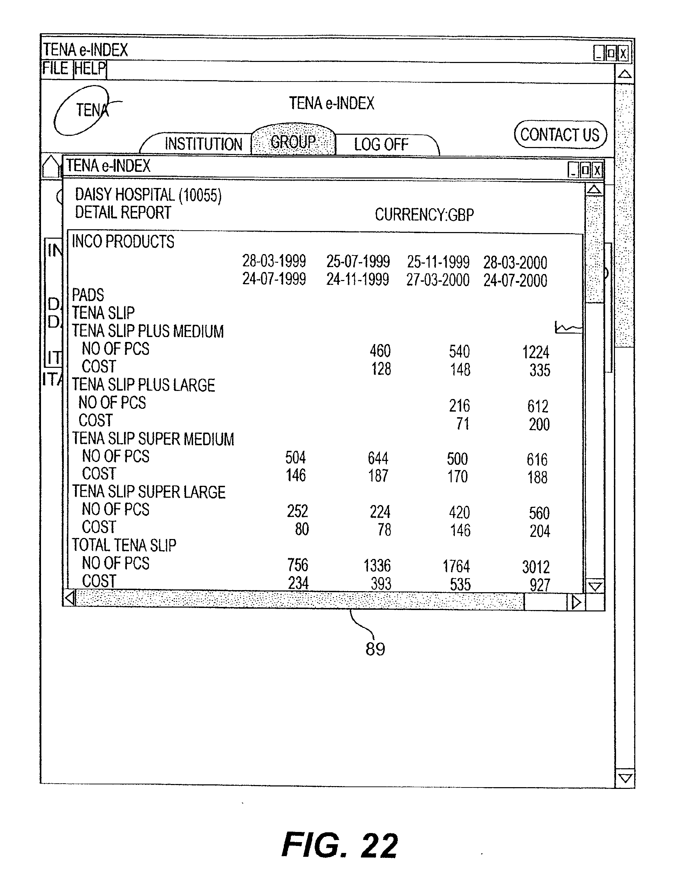

Fig. 22 illustrates the Detail Report GUI as a superimposed window. The superimposed window 89, including the Detail Report GUI, is obtainable using the institution links 88 (Fig. 21).

Data displayed and accessed using the various flow charts and screens illustrated in the figures is in the preferred embodiment stored in a database system of the server. As another alternative, the data displayed and accessed may only partly originate from a database(s) distant from the GUI environment of preferred embodiments of the present invention. Communication between the database(s) and the GUI environment is facilitated using wireline and/or wireless communication medium. However, other communication mediums may also be used, and such are fully within the contemplation of the invention.

## Claims

1. A method for generating a user interface for displaying data, the method comprising the steps of:
- generating a first graphical user interface having a user selectable field for selection of an institution group from a plurality of groups of institutions, another user selectable field for selection of a time period, means for selecting a currency type, and a first and a second button,
- generating a second graphical user interface upon actuation of the first button, the second graphical user interface having means for creating and modifying an allocation of institutions to the plurality of groups of institutions,
- storing, in response to a first user input, a first set of data representing, for each group of the plurality of groups of institutions, identification data of institutions contained in that group,
- creating a second set of data in response to a second user input, the second set of data representing at least an identification of the institution group, the time period, and the currency type selected by the user,
- generating a third graphical user interface in response to the first and second set of data upon actuation of the second button, the third graphical user interface displaying a first report chosen from a plurality of predefined reports, wherein the report comprises information relating to the institution group and the time period, the third graphical user interface comprising means for displaying a second report chosen from the plurality of predefined reports for each of the institutions of the institution group.

2. A method according to claim 1, wherein, in one or more of the groups of institutions, each institution is represented by one or more wards of that institution.

3. A method according to claim 1 or 2, wherein the institutions are located at geographically distinct locations.

4. A method according to claim 3, wherein the step of creating the first set of data is performed centrally at a location remote from the institutions.

5. A method according to any of the preceding claims, wherein the reports contain information pertaining to the institutions' consumption of specific products.

6. A method according to claim 5, wherein the first and second reports comprise:
- a summary report including information pertaining to a total amount of products used in the selected group of institutions during the selected time period, and
- a detail report including product-specific information pertaining to the products used in the selected group of institutions during the selected time period.

7. A method according to claim 6, wherein the step of generating the third graphical user interface comprises generating a graph pertaining to costs associated with the products used.

8. A method according to claim 6 or 7, wherein the graph further pertains to costs versus budget associated with the products used.

9. A computer system for generating a user interface for displaying data, the system comprising:
- a first distributed computer network comprising at least one server with a processor and a database,
- at least one workstation comprising a processor, a display unit and user input means,
- data transmission means for allowing transmission of data between the server and the workstation,
the computer system being operable to:
- generate, in the display unit of the workstation, a first graphical user interface having a user selectable field for selection of an institution group from a plurality of groups of institutions, another user selectable field for selection of a time period, means for selecting a currency type, and a first and a second button,
- generate, in the display unit of the workstation, a second graphical user interface upon actuation, via the user input means, of the first button, the second graphical user interface having means for creating and modifying an allocation of institutions to the plurality of groups of institutions,
- store in the database, in response to a first user input, a first set of data representing, for each group of the plurality of groups of institutions, identification data of institutions contained in that group,
- create a second set of data in response to a second user input, the second set of data representing at least an identification of the institution group, the time period, and the currency type selected by the user,
- in the display unit of the workstation: generate a third graphical user interface in response to the first and second set of data upon actuation of the second button, the third graphical user interface displaying a first report chosen from a plurality of predefined reports, wherein the report comprises information relating to the institution group and the time period, the third graphical user interface comprising means for displaying a second report chosen from the plurality of predefined reports for each of the institutions of the institution group.

10. A computer system according to claim 9, wherein the at least one workstation comprises a plurality of workstations.

11. A computer system according to claim 9, wherein the at least one server comprises a plurality of servers, whereby each of a plurality of the workstations is arranged to communicate with one server via the first network.

12. A computer system according to claim 10 or 11, wherein each workstation is arranged at one of the institutions, whereby the plurality of workstations are located at geographically distinct locations.

13. A computer system according to claim 11 or 12, wherein the plurality of servers are connected to a main server via a second distributed computer network.
